# EUROPEAN PATENT SPECIFICATION

(11) **EP 3 768 072 B1**
(45) Date of publication and mention of the grant of the patent: **13.07.2022**
(21) Application number: 19720184.1
(22) Date of filing: 21.03.2019
(51) Int. Cl.: A01G 31/04, A01G 9/14

(54) **CULTIVATING SYSTEM AND METHOD FOR CULTIVATING A CROP**
KULTIVIERUNGSSYSTEM UND VERFAHREN ZUR NUTZPFLANZENKULTIVIERUNG
SYSTÈME DE CULTURE ET PROCÉDÉ POUR CULTIVER UNE CULTURE

(30) Priority: 21.03.2018 NL 2020637
(43) Date of publication of application: 27.01.2021
(73) Proprietor: GEGE MACHINEBOUW BV, 5405 BE Uden (NL)
(72) Inventor: VAN ASSELDONK, Johannes, 5464 RA Veghel (NL)
(74) Representative: Arnold & Siedsma
(86) International application number: PCT/NL2019/050178
(87) International publication number: WO 2019/182448

(56) References cited:
- EP-A2- 0 133 494
- WO-A1-2017/000046
- GB-A- 2 026 831
- NL-A- 8 900 160
- US-A- 4 028 847

## Description

The invention relates to a cultivation system and a method for cultivating a crop or a precursor thereof on liquid.

Systems are known wherein a crop, at least a precursor thereof, for instance one or more seeds, is arranged in or on substrates, which substrates are held in a holder. The holder is held in a liquid, for instance water, so that crop seeds/crops can grow quickly.

Substrates can for instance be made of organic material, in particular potting compost and/or coconut fibre, or inorganic material, in particular rockwool or a foam, preferably polyurethane foam, after which the crop is cultivated on the substrate. In the case of a head crop the substrate can for instance consist of a foam plug, rockwool or a root ball. In the case of herbs it is for instance possible to place a piece of mesh in the opening of a holder, for instance with paper and/or felt on which the seed is placed so as to germinate. It is however also possible to place a small plant in the holder.

In order to cultivate the crop from a precursor (for instance the crop seed) into a finished product (for instance crop) manual processing and operations are necessary, such as transferring the seed or crop to a larger holder (pot or tray) one or more times and/or increasing the mutual distance of the substrates so as to take into consideration the ever increasing dimensions of the crop during cultivation. These processes and operations require a lot of labour and thereby increase costs. This manual processing can further increase the risk of pathogens finding their way into the crop, which may affect the quality of the crop and/or the yield of the cultivation system.

There is a need for a system and method of the type stated in the preamble wherein the cultivation can be carried out with fewer, preferably substantially without, manual operations and processing. There is also a need for a system and method wherein the mutual distances between the holders with the crop or the precursor thereof can be adjusted in rapid, simple, efficient and/or mechanical manner during growth of the crop. More generally, it is important to provide a system and method wherein the cultivation of the crop, from seed to end product, can be realized in a compact manner (i.e. with a relatively small floor area being required).

It is an object of the invention to provide a system and method wherein at least one of these needs is met at least partially.

GB 2 026 831 A discloses an apparatus and process for hydroponically growing plants in which the plants are advanced in rows through a growth chamber and subjected to artificial light and are supplied with nutrient, to accommodate the increased size of the plants as they grow. The longitudinal spacing between the rows may be increased automatically by a pair of screw members as the plants are advanced. The known apparatus is technically complex, has a limited capacity and only allows the spacing between the rows to be adapted.

WO 2017/000046 A1 discloses a system for cultivating a crop, comprising a guide and a plurality of gutters, wherein each gutter is provided to contain a plurality of crop units and wherein the guide is provided to guide the gutters in a first direction and to gradually increase the distance between adjacent gutters in said direction so that the number of crop units per square meter in the area substantially decreases, wherein the area comprises a first zone and a second zone, and wherein each gutter in the first zone contains crop units with a first intermediate distance and wherein each gutter in the second zone contains crop units with a second, larger intermediate distance and wherein the distance between gutters in the first zone at the position of a transition from the first zone to the second zone is considerably greater than the distance between gutters in the second zone. The know system is complex and costly. Furthermore, when less crops fit into a single gutter at a later stage of plant growth, the crops still need to be transferred from gutters with crops at an early growth phase to fewer plants in a gutter for a later growth stage. This transferal of the crops may be performed by hand. This may be considered labor-intensive and/or may require sufficient space to be available in the system in order to allow one or more persons to efficiently remove the crops from one gutter and place them in another one.

It may be a further object to provide a system and method wherein at least one of the above disadvantages of the prior art has been removed or at least reduced. It may also be an object to provide a system and method wherein the growing of plants can be automated even further.

According to a first aspect, a cultivation system for cultivating a crop or precursor thereof on liquid is provided for this purpose, the cultivation system comprising a frame provided with a number of cultivation sections arranged one behind the other in axial direction and extending in transverse direction, wherein each cultivation section comprises parallel transverse cultivation gutters configured to carry a row of crop holders in which the crop or a precursor thereof can be held and cultivated, wherein the cultivation sections comprise:
- a first cultivation section comprising a number of first transverse cultivation gutters and a second cultivation section comprising a number of second transverse cultivation gutters, wherein the mutual distances between the second transverse cultivation gutters are greater than the mutual distances between the first transverse cultivation gutters;
- one or more axial gutters between the transverse cultivation gutters of the first and second cultivation section;
- displacing means for moving the crop holders from the first cultivation section, via the at least one axial gutter to the second cultivation section;
- a spacer inserting unit for inserting one or more spacers into the transverse cultivation gutters of the second cultivation section for the purpose of increasing the mutual distance between the crop holders in the second transverse cultivation gutters.

In the cultivation system the mutual distances between the crops can be increased by moving the crop holders in each case to a subsequent cultivation section (i.e. an increase in the mutual distance in axial direction) and by inserting in each case one or more spacers (resulting in an increase in the mutual distance in transverse direction, transversely of the axial direction). The mutual distances can be increased as the crop grows in order to cultivate a crop compactly and efficiently in this manner. The increase in the mutual distances can further be brought about in automatic manner (for instance by activating the displacing means and the spacer inserting unit with a correct timing). The increase in the intermediate distance can also take place in two orthogonal directions (and so in fact in all directions in the plane formed by the axial and transverse directions). The increase in the intermediate distances can be realized in one or more steps.

In further embodiments the cultivation system comprises:
- one or more further cultivation sections, wherein each of the further cultivation sections comprises a further number of cultivation gutters, wherein the mutual distance between the further cultivation gutters in a further cultivation section is in each case greater than the mutual distance between the cultivation gutters of a previous cultivation section;
- further displacing means for moving the crop holders in the cultivation gutters of a previous cultivation section to the cultivation gutters of a further cultivation section;
- a further spacer inserting unit for inserting one or more spacers between crop holders and/or spacers for the purpose of increasing in each case the mutual distance between crop holders in the cultivation gutters of the one or more further cultivation sections relative to the mutual distance in the cultivation gutters of the previous cultivation section.

The mutual axial distances can characteristically lie in a range between 7 cm (for instance when the cultivation gutters are placed directly against each other in the first cultivation section) and 14 cm, 28 cm, 56 cm or even more, for instance in the third or still further cultivation section.

In an embodiment the transverse first cultivation gutters have a first mutual distance and the second transverse cultivation gutters have a second mutual distance, wherein the second mutual distance is greater than the first mutual distance. In this embodiment the (axial) intermediate distances are thus equal within a cultivation section, so that the crop can grow uniformly, but the (axial) intermediate distance does increase for the subsequent cultivation section. In other embodiments the mutual (axial) distances in a determined cultivation section can vary. The smallest mutual distance in the second cultivation section is then preferably greater than the greatest mutual distance in the first cultivation section.

In order to allow the crop or precursor thereof to grow in the liquid, the transverse cultivation gutters and/or the axial gutters are embodied in determined embodiments such that the liquid can be held in the gutters themselves. The (transverse and/or axial) gutters form reservoirs for holding liquid to be used for the cultivation.

In determined embodiments the cultivation system is embodied such that the transverse cultivation gutters of a cultivation section are in liquid connection with at least one of the axial gutters. This makes it possible to have the same liquid level within a cultivation section. In some embodiments all cultivation sections have the same liquid level. In other embodiments an individual liquid level (and/or composition of the liquid, as will be elucidated later) can be realized individually for each cultivation section or even for each part of a cultivation section. It is further possible to embody the system such that adjacent cultivation sections are in liquid connection with each other. In this way liquid can flow from the one cultivation section to the other. The liquid connection can be permanent and whole, but in other embodiments a controllable valve is provided, for instance a valve in at least one of the axial gutters, at a position between the first cultivation section and second cultivation section (more generally between a cultivation section and a subsequent cultivation section), for the purpose of closing or opening the liquid connection between the first and second cultivation section (or between further cultivation sections) as desired. This makes it possible to make the liquid level and/or the composition of the liquid in the second cultivation section independent from the liquid level in the first cultivation section. In the case of one or more further cultivation sections additional valves can be provided in order to regulate the liquid level and/or the liquid composition in each of the cultivation sections independently of each other. It is further the case that in determined embodiments the valves are embodied such that they can both close or open the liquid connection between successive cultivation sections as desired and enable the transport of crop holders along the gutters (irrespective of whether the valve is closed or open).

The liquid level in the cultivation sections is preferably set such that the crop or precursor thereof extends at least partially in the liquid. At first, the liquid level will thus often be higher than once a crop has already grown to some extent. The liquid is preferably supplied via a liquid supply embodied specifically for this purpose. The liquid can further preferably also be discharged via a liquid discharged embodied specifically for this purpose. The liquid supply and discharge can further co-act such that the liquid level and/or the composition of the liquid in the gutters can be set as desired. In some cases the liquid level has to be relatively high, for instance because the crop is still small and/or needs a lot of liquid in order to grow properly, while in other cases the liquid level is preferably lower. In determined embodiments the liquid must contain a relatively large amount of nutrients which stimulate the growth of a crop at a certain stage.

The supply and discharge need in fact only be provided at one location in the system (if all cultivation sections are in direct liquid connection with each other) or at one location per cultivation section (if it must be possible for the liquid level to differ per cultivation section), but in other embodiments a supply and/or discharge is provided in each of the transverse cultivation gutters and/or each of the axial gutters.

The transverse and axial gutters can take different forms. In a preferred embodiment a transverse cultivation gutter and/or an axial gutter however comprises an elongate profile with a substantially U-shaped or V-shaped cross-section, the free outer ends of which are provided with inward directed support flanges for carrying thereon a row of crop holders and/or spacers. The crop holder can for instance be a flat, substantially rectangular plate which can be supported by the support flanges. In a determined embodiment the spacers are also embodied as flat, substantially rectangular plates. In determined embodiments the longitudinal edges of the flat plate (i.e. a crop holder and/or a spacer) are embodied with a groove in which a support flange can be arranged. In this situation the crop holder and/or a spacer is displaceable along the gutter in question. The crop holders can for instance be displaced from a first transverse gutter to an axial gutter, then from the axial gutter to a second transverse gutter, and so on, and thus progress through the whole cultivation system.

While the spacer can for instance be a solid rectangular plate, the crop holder is provided with an option for carrying the crop or the precursor thereof. In determined embodiments this option is formed by a receiving opening in the crop holder which is configured to receive therein a carrier on which the crop or a precursor of the crop is arranged. When the crop or the precursor is carried through a transverse and/or axial gutter, the crop or the precursor thereof can lie at a position such that at least a part thereof (for instance the roots) extend into the liquid in the gutter in question.

As described above, the crop holders and the spacers can be moved (i.e. displaced) along the axial and transverse gutters of the cultivation system by means of displacing means. In determined embodiments these displacing means can comprise:
- transverse displacing means for moving a row of crop holders or a row of crop holders with spacers placed therebetween in transverse direction through the transverse cultivation gutters; and/or
- longitudinal displacing means for moving a number of crop holders or a number of crop holders with spacers placed therebetween in axial direction through the axial gutters.

The transverse displacing means and longitudinal spacing means can for instance be controlled independently of each other using a control unit. In this way, every time that the crop in the individual crop holders has grown sufficiently, the crop in the crop holders can be moved to a further cultivation section, wherein the mutual distances between the crop holders are greater (seen both in axial and in transverse direction) so that the crop can continue to grow under improved conditions.

In a determined embodiment the transverse displacing means comprise:
- a supply unit, preferably a cartridge, for keeping a number of crop holders or spacers in stock;
- a pushing unit with one or more pushers for pushing crop holders supplied via the supply unit one by one through one or more cultivation gutters or pushing a quantity of crop holders supplied via an axial gutter and spacers supplied via the supply unit one by one through one or more cultivation gutters.

In the first cultivation section it will generally only be crop holders which are pushed, since the spacers are only introduced starting in the second cultivation section. The supply holder can for instance comprise a supply of crop holders placed one above the other, the lowermost one of which can in each case be pushed from under the supply unit by the pusher. A subsequent crop holder then in each case drops down under the influence of the force of gravity so that the pusher can start pushing against a subsequent crop holder.

In a determined embodiment the longitudinal displacing means comprise a linearly movable holder. This holder is configured to carry one or more crop holders. The holder (optionally with the crop holders carried thereon) can be moved reciprocally in axial direction by a drive. The drive is in particular moved between a first position at the discharge end of a number of transverse cultivation gutters of a cultivation section and a position at the supply end of a number of transverse cultivation gutters of a subsequent cultivation section. In a position opposite the supply end of the further cultivation section the above stated transverse displacing means can push the crop holders moved via the linearly movable holder into the relevant transverse cultivation gutters. In this way an efficient cultivation system in which the crop holder can be moved simply and quickly between different cultivation sections (with differing mutual distances of the crop holders) is made possible. In determined embodiments it is further possible to move the crop holders between the different cultivation sections without manual intervention (all displacements can take place in automated manner) and without the necessity of removing the crop from the liquid (for instance water), so that uninterrupted growth of the crop is possible.

In determined embodiments the different cultivation sections are separated from each other to greater or lesser extent. The cultivation system can for instance comprise one or more transverse partition walls which are arranged between successive cultivation sections. In this way different cultivating conditions (for instance in respect of lighting, air humidity, air temperature and the like) can be realized per cultivation section. In a further embodiment the cultivation system comprises a climate control unit for controlling at least one of the temperature and air humidity. The unit can be configured to ensure a desired temperature and/or air humidity in the whole system, but can also be configured to set an individual temperature and/or air humidity per cultivation section (for instance when the cultivation system is divided into compartments by means of the above stated partition walls).

The cultivation system can be disposed in the outside air but can also be disposed in a greenhouse, glasshouse or the like. The light necessary for the growth can be provided by direct or indirect sunlight, artificial light (for instance LED lamps) or by a combination thereof.

The cultivation system can otherwise be a single-layer system, for instance such as the cultivation system to be described below with reference to the figures. In other embodiments the cultivation system however comprises two or more single-layer cultivation systems positioned one above the other.

The use of artificial light and climate control techniques can increase the control, production and efficiency of the cultivating process and/or reduce the cost price of the end product.

A second aspect of the present invention relates to the use of a cultivation system as defined herein.

A third aspect of the invention relates to a method for cultivating a crop or a precursor thereof on liquid, the method comprising of:
- placing a number of crop holders in a number of mutually adjacently arranged transverse cultivation gutters of a first cultivation section;
- bringing about partial growth of the crop or the precursor thereof in the crop holders;
- moving the crop holders from the transverse cultivation gutters of the first cultivation section to transverse cultivation gutters of a second cultivation section for the purpose of increasing the mutual axial distance between the crop holders;
also comprising of inserting one or more spacers between crop holders during the displacement for the purpose of increasing the mutual transverse distance between the crop holders.

Further advantages, features and details of the invention will be elucidated on the basis of the following description of several embodiments thereof. Reference is made in the description to the accompanying figures, in which:
- Figure 1 is a top view of an embodiment of a crop holder;
- Figures 2 and 3 are respective perspective side views of an embodiment of a cultivation system;
- Figure 4 is a top view of the embodiment of the cultivation system of figures 1 and 2;
- Figure 5 is a cross-section through an embodiment of a transverse cultivation gutter of the cultivation system of figures 2-4;
- Figures 6A-6E are partially cut-away perspective side views of the cultivation system 1 according to figures 1-5, in different stages of displacement of the crop holders from a cultivation section to a subsequent cultivation section; and
- Figure 7 is a top view of an embodiment of a spacer.

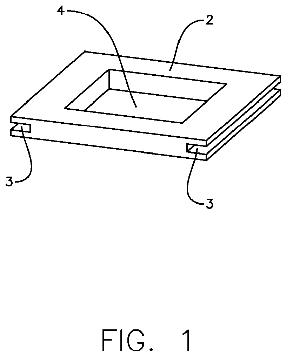

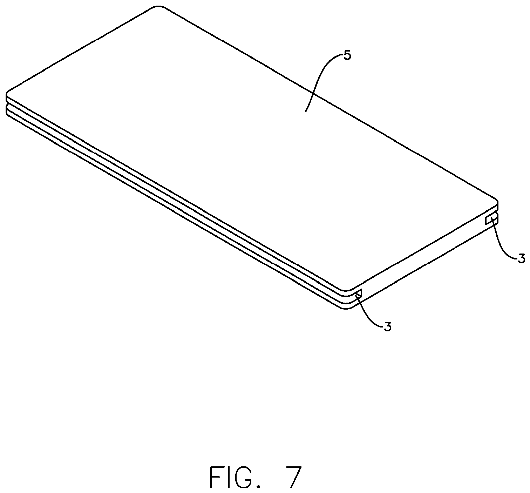

Figures 1-7 show an embodiment of a cultivation system 1 for cultivating a crop or a precursor thereof. The exemplary embodiment of the cultivation system described herein is particularly intended for cultivating head crops, such as different types of lettuce and endive. With the cultivation system it is further also possible to cultivate other types of vegetable and herb on the system.

Referring to figure 1, the crop or the precursor thereof is cultivated in a large number of plate-like crop holders 2. A crop holder can be formed from a rectangular plate, for instance manufactured from plastic, having in the centre thereof a receiving opening 4 for receiving therein a carrier on which the crop or a precursor of the crop can be arranged. In the shown embodiment the receiving opening has a square shape, but in practice the receiving opening can have a random shape, such as a rectangular, round or other shape. The crop can grow freely in receiving opening 4. In the case of a head crop a carrier such as a substrate (not shown) can be placed in receiving opening 4. The substrate can for instance comprise a foam plug, a quantity of rockwool or a root ball. It is also possible (particularly in the case of for instance herbs) to place a piece of mesh in receiving opening 4 of crop holder 2, for instance with paper and/or felt on which the seed is placed so as to germinate. It is possible to start the cultivating process in cultivation system 1 from the seed, but it is optionally also possible to place a small plant in crop holder 2.

Respective longitudinal grooves 3 are arranged in two mutually opposite sides of the plate-like crop holder 2. Longitudinal grooves 3 enable the crop holder to be carried on two inward directed support flanges 40, 41 of a gutter (for instance a transverse gutter or an axial gutter). In carried state, crop holder 2 can be displaced along the relevant gutter so that it can be moved from the one cultivation section to the next cultivation section without the crop holder having to be removed from a gutter. When the gutter is further filled with a row of crop holders 2, it suffices to push against a crop holder on one side in order to move this crop holder as well as the rest of the crop holders in the row in the desired direction.

Cultivation system 1 also comprises a number of plate-like spacers 5 (also referred to as intermediate plates) for adjusting the distance between crop holders 2 in a gutter. The spacers can take a plate-like form and, just as the crop holders, be provided with longitudinal grooves. In determined embodiments the shape and/or dimensions of spacers 5 correspond to those of crop holders 2, wherein the receiving opening can then be dispensed with. It is however also possible to embody the spacers differently or to use empty crop holders as spacers.

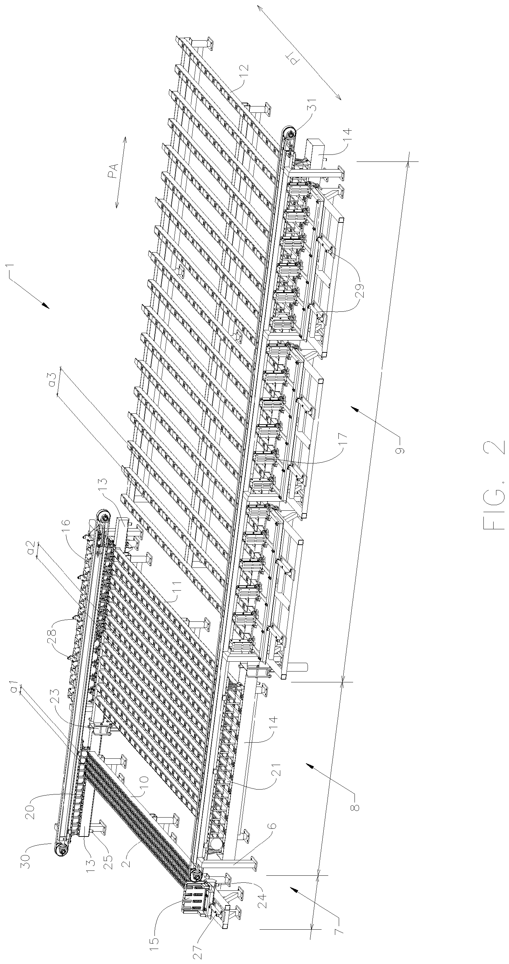

Referring to figures 2-4, cultivation system 1 comprises a (stationary) frame 6 to be disposed on a ground surface (floor) and provided with a number of cultivation sections 7-9 arranged one behind the other in axial direction (P_{A}) and extending in transverse direction (P_{T}). In the shown embodiment the cultivation system comprises a first cultivation section 7, a second cultivation section 8 and a further (third) cultivation section 9. In other embodiments there are only two cultivation sections, or the number of cultivation sections is greater than three.

Each cultivation section comprises a set of parallel transverse cultivation gutters. More particularly, first cultivation section 7 comprises four transverse first cultivation gutters 10, second cultivation section 8 comprises twelve transverse second cultivation gutters 11 and third cultivation section 9 comprises eighteen transverse third cultivation gutters 12.

First cultivation section 7 comprises an infeed side where crop holders 2 can be fed into first cultivation gutters 10 and a discharge side where the crop holders can be removed from first cultivation gutters 10 and can be arranged in an axial cultivation gutter 13. In similar manner, the second cultivation section 8 comprises an infeed side where crop holders 2 from axial cultivation section 13 can be fed into the second transverse cultivation gutters 11 and a discharge side where crop holders 2 can be removed from the second transverse cultivation gutters 11 and can be arranged in a second axial cultivation gutter 14. The second axial cultivation gutter 14 leads to the third cultivation section 9. In the third cultivation section the crop holders 2 can be transferred to a set of third transverse cultivation gutters 12.

Provided on the infeed side of the first transverse cultivation gutters 10 of first cultivation section 7 is a supply unit 15 for keeping a large number of crop holders 2 in stock. A number of similar supply units 16 for keeping a large number of spacers 5 in stock is likewise provided on the infeed side of the second transverse cultivation gutters 11 of second cultivation section 8. The third cultivation section (and optional further cultivation sections) is also provided with a number of such supply units 17. Each supply unit 15, 16, 17 comprises one or more stacks of respectively crop holders and spacers which can be pushed one by one into a transverse cultivation gutter by displacing means. Supply unit 15 comprises for this purpose a pushing unit 27 with one or more pushers which can be moved reciprocally in horizontal direction via an electric motor or similar drive for the purpose of pushing in each case the lowermost crop holder 2 in supply unit 15 into the infeed side of a first cultivation gutter 10. In similar manner, a supply unit 16 comprises displacing means in the form of at least one pushing unit 28 with one or more pushers for pushing in each case the front crop holder 2 and in each case the lowermost spacer 5 from the relevant supply unit 16 into the infeed side of a second or further cultivation gutter 11. A supply unit 17 can in turn comprise displacing means in the form of at least one pushing unit 29 with one or more pushers for the purpose of pushing in each case the front crop holder 2 and in each case the lowermost spacer 5 from the relevant supply unit 17 into the infeed side of a further cultivation gutter 12.

When a crop holder or spacer is inserted on the infeed side of a transverse cultivation gutter, a crop holder or spacer simultaneously leaves the relevant transverse cultivation gutter and is pushed into an axial cultivation gutter. Provided in the first axial cultivation gutter 13 are displacing means which provide for a displacement of a number of crop holders in axial direction (P_{A}) from first cultivation section 7 to second cultivation section 8. In the shown embodiment the displacing means comprise a linearly movable holder 20 which can be moved reciprocally in axial direction by means of a drive motor 30. The second axial cultivation gutter 14 likewise comprises such displacing means in the form of a holder 21, linearly movable with a drive motor 31, for moving a combination of crop holders 2 and spacers 5 from second cultivation section 8 to third cultivation section 9.

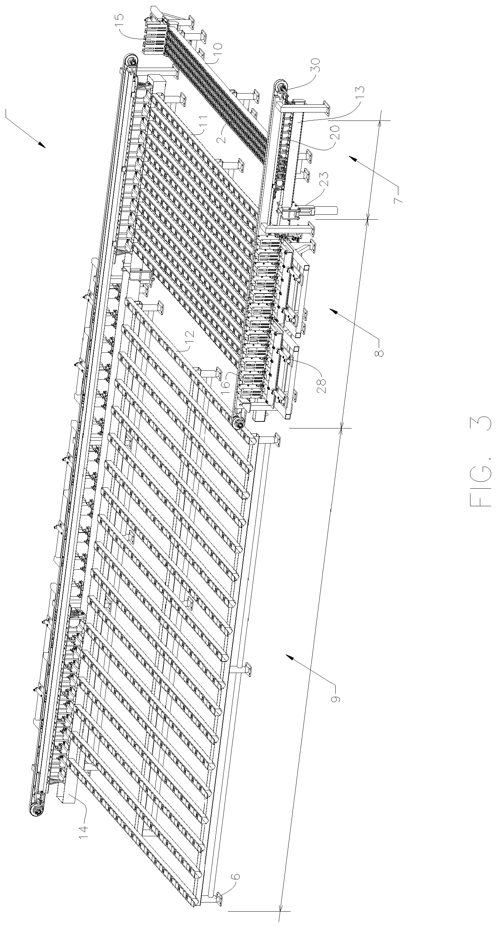

As shown in figures 2 and 3, the mutual axial distance (a₁) between the first transverse cultivation gutters 10 in the first cultivation section 7 is small (for instance 7 cm if the cultivation gutters are positioned against each other, or several cm, for instance 5 < a₁ < 10 cm). The mutual axial distance (a₂) between the second transverse cultivation gutters 11 in the second cultivation section 8 is greater (a₂ > a₁), preferably twice as great (a₂ = 2a₁), for instance 10 cm < a₂ < 20 cm. The mutual axial distance (a₃) between the third transverse cultivation gutters 12 in the third cultivation section 9 is greater (a₃ > a₂ > a₁), preferably twice as great (a₃ = 2a₂), for instance 20 cm < a₃ < 40 cm. The above stated means that the crop holders come to lie increasingly further apart in axial direction when they are moved to a subsequent cultivation section.

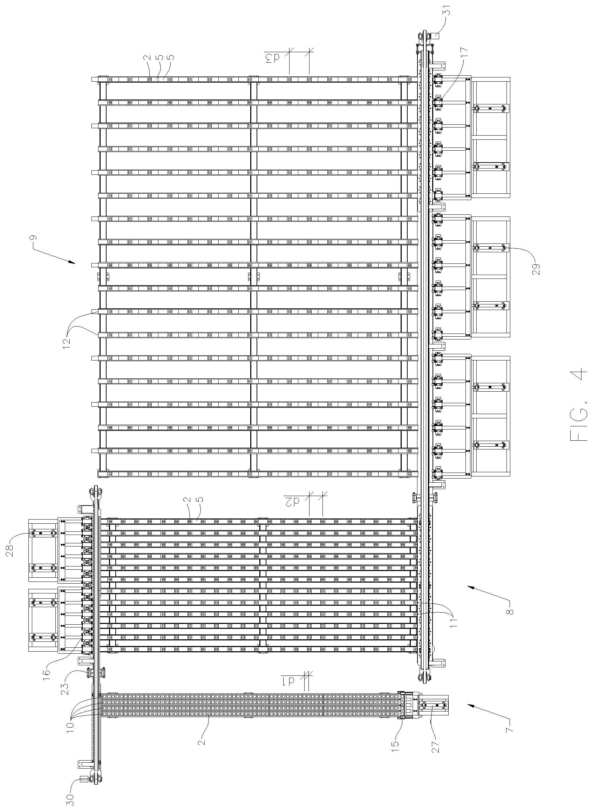

Because not only the crop holders 2 of a previous cultivation section are fed into second cultivation section 8 and further cultivation sections 9, but in each case also one or more spacers 5, the transverse distance between the crop holders in a transverse cultivation gutter also increases. Referring to figure 4, when crop holders 2 in first cultivation section 7 lie against each other, the mutual distance between the crop holders in transverse direction is zero. This means that the mutual distance d₁ between adjacent openings 4 in adjacent crop holders is in principle equal to the length of the crop holders. In the second cultivation section one spacer 5 is in each case arranged between two crop holders 2, so that the distance d₂ between the openings 4 of adjacent crop holders 2 has increased (d₂ > d₁). In the third cultivation section 9 still more spacers 5 are arranged between crop holders 2 (for instance the number of two spacers between two subsequent crop holders, although this number can also be greater), so that it is the case that d₃ > d₂.

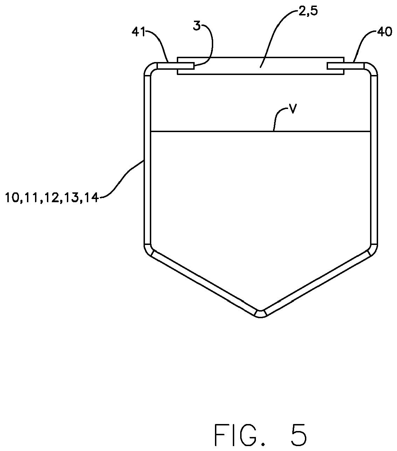

During operation the first cultivation section 7 is first filled with crop holders 2 by pushing in each case a crop holder from the underside of supply unit 15 simultaneously into all transverse cultivation gutters 11 with the (hydraulically, pneumatically or electrically driven) pusher(s) of pushing unit 27. In the shown embodiment four crop holders are thus inserted simultaneously into the four transverse cultivation gutters 11. Crop holders 2 are carried via their grooves 3 on the inward directed support flanges 40, 41 (figure 5) of transverse cultivation gutter 11. The substrate or growth medium is then placed in the openings 4 of crop holders 2. Immediately thereafter (or prior thereto) the seed is arranged on the substrate or growth medium. In this way the whole first cultivation section 7 is filled up. (Prepared) liquid (water, optionally provided with supplements) is pumped into the transverse cultivation gutters 11. First cultivation section 7 comprises for this purpose a liquid supply 24 and a liquid discharge 25 for respectively supplying and discharging liquid to and/or from the transverse cultivation gutters 11 (and optionally the axial cultivation gutter 13, which is in liquid connection therewith, up to the first valve 23). The level of the liquid (v, figure 5) in the relevant transverse cultivation gutters and optionally a (part of the) axial cultivation gutter can be precisely controlled with the liquid supply and discharge. The substrate absorbs the liquid, whereby the seed is able to germinate. In the case of a piece of mesh with for instance paper and/or felt liquid is additionally or alternatively sprayed/atomized from above in order to allow the seed to germinate.

As soon as the seed in crop holders 2 in first cultivation section 7 has germinated and the crop (small plants) springing therefrom has rooted and grown, it is time to increase the mutual distance so that the crop is given space to continue growing. The liquid is discharged via the liquid discharge from transverse cultivation gutters 10 and axial cultivation gutter 13 and the first valve 23 can then be opened, as will be elucidated below.

Transverse cultivation gutters 10 of first cultivation section 7 are now filled with new, empty crop holders 2. The already present crop holders 2 with crops are pushed further and, at the outer ends of the respective transverse cultivation gutters 10, end up in the axial gutter 13 lying transversely at the outer end of the first cultivation section 7.

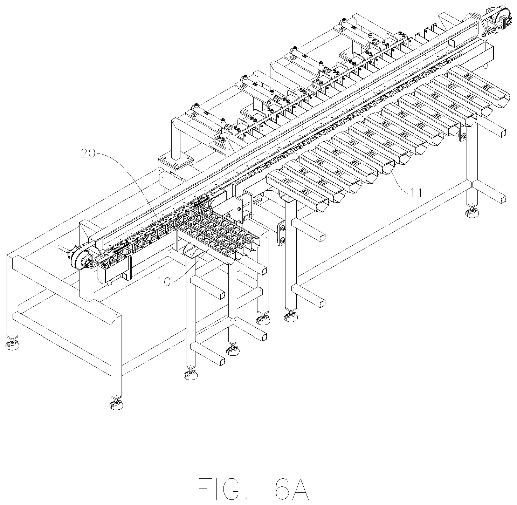

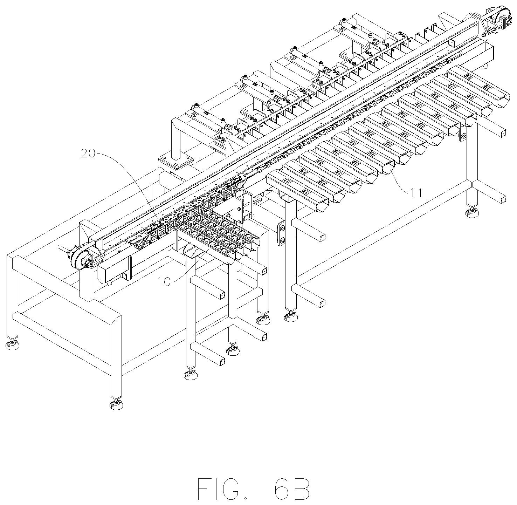

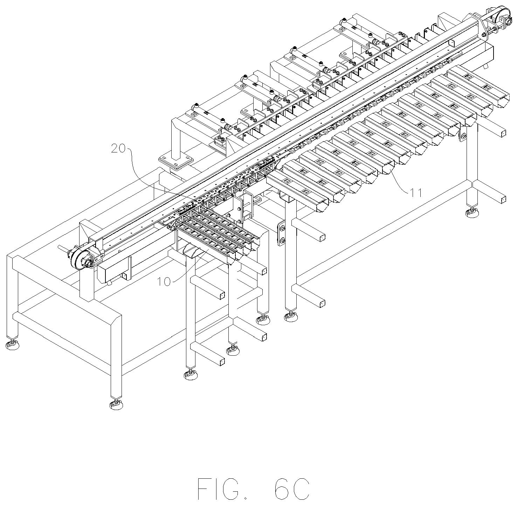

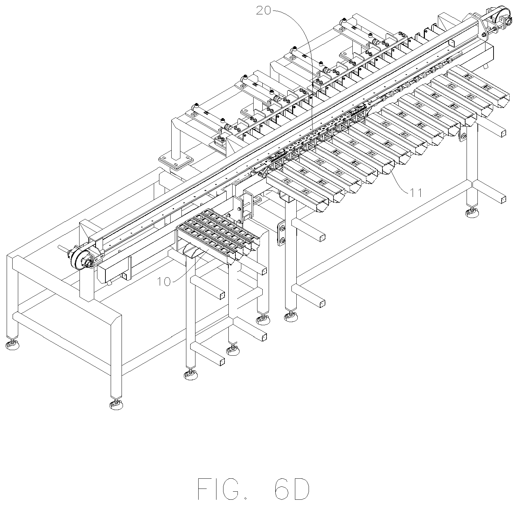

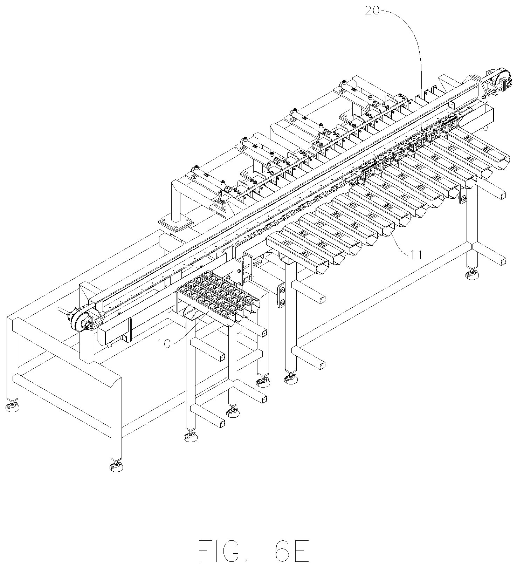

Referring to figures 6A-6E, crop holders 2 with crops are then received in the linearly movable holder 20. In the shown embodiment this holder provides space to twelve crop holders 2 (although this number can be smaller or greater in other embodiments). Since there are four transverse cultivation gutters 10 in the shown embodiment, the (axially) linearly movable holder 20 is filled in three steps in the shown embodiment. In other embodiments the number of steps will be smaller (two or one) or will conversely be greater (four, five, ... steps). Valve 23 in the axial cultivation gutter 13 is opened so that crop holders 2 with crops in the moveable holder 20 are moved (figures 6A-6E) until the row of crop holders 2 in holder 20 are situated opposite the transverse cultivation gutters 11 of second cultivation section 8.

In the shown embodiment the second cultivation section 8 has twelve transverse cultivation gutters 11, wherein a mutual distance (a₂) between the cultivation gutters 11 is chosen which is twice as large as the mutual axial distance (a₁) between the cultivation gutters 10 of first cultivation section 7. Six crop holders 2 are first inserted into second cultivation section 8, and a spacer 5 is inserted into cultivation section 8 at the same time as each crop holder 2. Drive 30 then moves the moveable linear holder 20 to the subsequent six transverse cultivation gutters 11 of the second cultivation section 8, and the remaining six crop holders 2 including spacers 5 are inserted into cultivation section 8. The linearly movable holder 20 then returns to first cultivation section 7 and is filled again.

As described above, the spacers 5 are dispensed from a supply system 17 (for instance a cartridge system). The (hydraulically, pneumatically or electrically driven) pusher of pushing unit 29 inserts in each case the lowermost spacers 5 together with crop holders 2 into the relevant cultivation section 8. In this way the mutual distance between the crops is automatically increased in two directions. Depending on the size of the crop, this step can be repeated once again by carrying the crop in similar manner from the second to the third cultivation section. The third cultivation section 9 has eighteen transverse gutters 12. The length of the different cultivation sections remains roughly the same here. If desired, and depending on the application, cultivation system 1 can have a length of up to 100-200 metres or even more.

As soon as the crop is fully grown, it can be harvested. At the end of the section, the holders with the crop are received in a movable carrier which is moveable transversely behind the final cultivation section. While this carrier moves, the crop can be cut off by means of for instance a circular knife, a hygienic water jet or similar cutting means. Because there are in principle no contaminants on the crop, it is immediately ready to be (cut and) packaged. The roots can also immediately be cut on the underside of the holder with further cutting means. Crop holders 2 and spacers 5 can then be washed and reused.

The liquid (for instance water) is circulated through gutters 10-12, 13-14, wherein nutrients and oxygen can for instance be added to the liquid and/or the temperature and/or pH value of the water can for instance be regulated. In determined embodiments each cultivation section has its own circulation system wherein differences in respect of water composition and temperature can thus be made per cultivation section. If the system is placed in a climate cell, the climate in the cell can also be regulated. If a partition wall is placed between the sections, the climate can be controlled individually per section.

The present invention is not limited to the embodiments described herein. The rights are defined by the following claims, within the scope of which numerous modifications and adjustments can be envisaged.

## Claims

1. Cultivation system for cultivating a crop or a precursor thereof on liquid, the cultivation system comprising a frame (6) provided with a number of cultivation sections (7,8,9) arranged one behind the other in axial direction and extending in transverse direction, wherein each cultivation section comprises parallel transverse cultivation gutters 2 (10,11,12) configured to carry a row of crop holders (2) in which the crop or a precursor thereof can be held and cultivated, wherein the cultivation sections (7,8,9) comprise:
- a first cultivation section (7) comprising a number of first transverse cultivation gutters (10) and a second cultivation section (8) comprising a number of second transverse cultivation gutters (11), wherein the mutual axial distances between the second transverse cultivation gutters (11) are greater than the mutual axial distances between the first transverse cultivation gutters (10), **characterised in that** the cultivation sections further comprise:
- one or more axial cultivation gutters (13,14) at ends of the transverse cultivation gutters (10,11) of the first and second cultivation section (7,8);
- displacing means for moving the crop holders (2) from the first cultivation section, via the at least one axial gutter to the second cultivation section;
- a spacer inserting unit for inserting one or more spacers (5) into the transverse cultivation gutters of the second cultivation section for the purpose of increasing the mutual transverse distance between the crop holders (2) in the second transverse cultivation gutters.

2. Cultivation system according to claim 1, wherein the transverse first cultivation gutters have a first mutual transverse distance and the transverse second cultivation gutters have a second mutual transverse distance, wherein the second mutual transverse distance is greater than the first mutual transverse distance.

3. Cultivation system according to claim 1 or 2, comprising:
- one or more further cultivation sections, wherein each of the further cultivation sections comprises a further number of cultivation gutters, wherein the mutual axial distance between the further cultivation gutters in a further cultivation section is in each case greater than the mutual axial distance between the cultivation gutters of a previous cultivation section;
- further displacing means for moving the crop holders (2) in the cultivation gutters of a previous cultivation section to the cultivation gutters of a further cultivation section;
- a further spacer inserting unit for inserting one or more spacers (5) between crop holders and/or spacers for the purpose of increasing in each case the mutual transverse distance between crop holders in the cultivation gutters of the one or more further cultivation sections relative to the mutual transverse mutual distance in the cultivation gutters of the previous cultivation section.

4. Cultivation system according to any one of the foregoing claims, wherein the transverse cultivation gutters and/or the axial gutters are embodied to hold liquid, particularly water, therein and/or wherein the transverse cultivation gutters and, preferably, the axial gutters form reservoirs for holding liquid to be used for the cultivation,
wherein the transverse cultivation gutters of a cultivation section are preferably in liquid connection with at least one of the axial gutters.

5. Cultivation system according to any one of the foregoing claims, comprising a valve in at least one of the axial gutters, at a position between the first cultivation section and second cultivation section, for the purpose of opening and closing a liquid connection between the first and second cultivation section.

6. Cultivation system according to any one of the foregoing claims, comprising a liquid supply and/or a liquid discharge for respectively supplying and/or discharging liquid to and/or from the transverse cultivation gutters and/or axial gutters.

7. Cultivation system according to any one of the foregoing claims, wherein a transverse cultivation gutter and/or an axial gutter comprises:
- an elongate profile with a substantially U-shaped or V-shaped cross-section, the free outer ends of which are provided with inward directed support flanges for carrying thereon a row of crop holders (2) and/or spacers (5).

8. Cultivation system according to any one of the foregoing claims, wherein a crop holder comprises a flat, substantially rectangular plate with a receiving opening for receiving therein a carrier on which the crop or a precursor of the crop is arranged.

9. Cultivation system according to claim 8 , wherein the longitudinal edges of the flat plate are embodied with a groove in which a support flange can be arranged.

10. Cultivation system according to any one of the foregoing claims, wherein the crop holder (2) is configured, when carried by a transverse cultivation gutter and/or axial gutter, to be displaceable along the gutter in question and/or wherein the crop holders (2) and transverse cultivation gutters are configured to set a liquid level such that the crop or precursor thereof extends at least partially in the liquid.

11. Cultivation system according to any one of the foregoing claims, wherein the displacing means comprise:
- transverse displacing means for moving a row of crop holders (2) or a row of crop holders with spacers (5) placed therebetween in transverse direction through the transverse cultivation gutters; and/or
- longitudinal displacing means for moving one or more crop holders (2) or one or more crop holders (2) with spacers (5) placed therebetween in axial direction through the axial gutters, wherein the transverse displacing means are preferably provided per cultivation section and comprise:
- a supply unit, preferably a cartridge, for keeping a number of crop holders (2) or spacers (5) in stock;
- a pushing unit with one or more pushers for pushing crop holders (2) supplied via the supply unit one by one through one or more cultivation gutters or pushing a quantity of crop holders (2) supplied via an axial gutter and spacers supplied via the supply unit one by one through one or more cultivation gutters.

12. Cultivation system according to claim 11, wherein the longitudinal displacing means comprise a linearly movable holder, wherein the holder is configured to carry one or more crop holders (2) and wherein the holder can be moved by a drive reciprocally in axial direction between a position at the discharge end of a number of transverse cultivation gutters of a cultivation section and a position at the supply end of a number of transverse cultivation gutters of a subsequent cultivation section.

13. Cultivation system according to any one of the foregoing claims, comprising one or more transverse partition walls arranged between successive cultivation sections and/or comprising a climate control unit for controlling at least one of the temperature and air humidity.

14. Use of a cultivation system according to any one of the foregoing claims.

15. Method for cultivating a crop or a precursor thereof on liquid in a cultivation system according to any one of claims 1-13, the method comprising of:
- placing a number of crop holders (2) in a number of mutually adjacently arranged transverse cultivation gutters (10) of a first cultivation section (7);
- bringing about partial growth of the crop or the precursor thereof in the crop holder: (2)
- moving the crop holders (2) from the transverse cultivation gutters (10) of the first cultivation section (7) to transverse cultivation gutters (11) of a second cultivation section (8) for the purpose of increasing the mutual axial distance between the crop holders (2); also comprising of inserting one or more spacers (5) between crop holders (2) during the displacement for the purpose of increasing the mutual transverse distance between the crop holders (2)

## Patentansprüche

1. Ein Kultivierungssystem zum Kultivieren einer Pflanze oder einer Vorstufe davon auf Flüssigkeit, wobei das Kultivierungssystem einen Rahmen (6) aufweist, der mit einer Anzahl von Kultivierungsabschnitten (7, 8, 9) versehen ist, die in axialer Richtung einer hinter dem anderen angeordnet sind und sich in Querrichtung erstrecken, wobei jeder Kultivierungsabschnitt parallele, quer verlaufende Kultivierungsrinnen (10, 11, 12) aufweist, die so ausgebildet sind, dass sie eine Reihe von Pflanzenträgem (2) aufnehmen, in denen die Pflanze oder eine Vorstufe davon gehalten und kultiviert werden kann, wobei die Kultivierungsabschnitte (7, 8, 9) folgendes aufweisen:
- einen ersten Kultivierungsabschnitt (7), aufweisend eine Anzahl von ersten quer verlaufenden Kultivierungsrinnen (10) und einen zweiten Kultivierungsabschnitt (8), aufweisend eine Anzahl von zweiten quer verlaufenden Kultivierungsrinnen (11), wobei die gegenseitigen axialen Abstände zwischen den zweiten quer verlaufenden Kultivierungsrinnen (11) größer sind als die gegenseitigen axialen Abstände zwischen den ersten quer verlaufenden Kultivierungsrinnen (10), **dadurch gekennzeichnet, dass** die Kultivierungsabschnitte weiter folgendes aufweisen:
- eine oder mehrere axiale Kultivierungsrinnen (13, 14) an den Enden der querverlaufenden Kultivierungsrinnen (10, 11) des ersten und zweiten Kultivierungsabschnitts (7, 8);
- eine Verschiebeeinrichtung zum Bewegen der Pflanzenträger (2) vom ersten Kultivierungsabschnitt über die mindestens eine axiale Rinne zum zweiten Kultivierungsabschnitt;
- eine Abstandshaltereinsetzeinheit zum Einsetzen eines oder mehrerer Abstandshalter (5) in die querverlaufenden Kultivierungsrinnen des zweiten Kultivierungsabschnitts zum Zweck der Vergrößerung des gegenseitigen Querabstands zwischen den Pflanzenträgern (2) in den zweiten querverlaufenden Kultivierungsrinnen.

2. Das Kultivierungssystem nach Anspruch 1, wobei die querverlaufenden ersten Kultivierungsrinnen einen ersten gegenseitigen Querabstand haben und die querverlaufenden zweiten Kultivierungsrinnen einen zweiten gegenseitigen Querabstand haben, wobei der zweite gegenseitige Querabstand größer ist als der erste gegenseitige Querabstand.

3. Das Kultivierungssystem nach Anspruch 1 oder 2, aufweisend:
- einen oder mehrere weitere Kultivierungsabschnitte, wobei jeder der weiteren Kultivierungsabschnitte eine weitere Anzahl von Kultivierungsrinnen aufweist, wobei der gegenseitige axiale Abstand zwischen den weiteren Kultivierungsrinnen in einem weiteren Kultivierungsabschnitt jeweils größer ist als der gegenseitige axiale Abstand zwischen den Kultivierungsrinnen eines vorherigen Kultivierungsabschnitts;
- eine weitere Verschiebeeinrichtung zum Bewegen der Pflanzenträger (2) in den Kultivierungsrinnen eines vorherigen Kultivierungsabschnitts zu den Kultivierungsrinnen eines weiteren Kultivierungsabschnitts;
- eine weitere Abstandshaltereinsetzeinheit zum Einsetzen eines oder mehrerer Abstandshalter (5) zwischen Pflanzenträgem und/oder Abstandshaltern, zum Zwecke der Vergrößerung des jeweiligen gegenseitigen Querabstandes zwischen Pflanzenträgern in den Kultivierungsrinnen des einen oder der mehreren weiteren Kultivierungsabschnitte relativ zum gegenseitigen Querabstand in den Kultivierungsrinnen des vorherigen Kultivierungsabschnittes.

4. Das Kultivierungssystem nach einem der vorangehenden Ansprüche, wobei die querverlaufenden Kultivierungsrinnen und/oder die axialen Rinnen zur Aufnahme von Flüssigkeit, insbesondere Wasser, ausgebildet sind und/oder wobei die querverlaufenden Kultivierungsrinnen und vorzugsweise die axialen Rinnen Reservoirs zur Aufnahme von Flüssigkeit, die zur Kultivierung verwendet wird, bilden,
wobei die querverlaufenden Kultivierungsrinnen eines Kultivierungsabschnitts vorzugsweise in Flüssigkeitsverbindung mit mindestens einer der axialen Rinnen stehen.

5. Das Kultivierungssystem nach einem der vorangehenden Ansprüche, aufweisend ein Ventil in mindestens einer der axialen Rinnen, an einer Position zwischen dem ersten Kultivierungsabschnitt und dem zweiten Kultivierungsabschnitt, zum Zwecke des Öffnens und Schließens einer Flüssigkeitsverbindung zwischen dem ersten und zweiten Kultivierungsabschnitt.

6. Das Kultivierungssystem nach einem der vorangehenden Ansprüche, aufweisend eine Flüssigkeitszufuhr und/oder einen Flüssigkeitsabfluss für die Zufuhr und/oder den Abtransport von Flüssigkeit zu und/oder von den quer verlaufenden Kultivierungsrinnen und/oder axialen Rinnen.

7. Das Kultivierungssystem nach einem der vorangehenden Ansprüche, wobei eine quer verlaufende Kultivierungsrinne und/oder eine axiale Rinne folgendes aufweist:
- ein langgestrecktes Profil mit einem im wesentlichen U- oder V-förmigen Querschnitt, dessen freie äußere Enden mit nach innen gerichteten Stützflanschen versehen sind, um darauf eine Reihe von Pflanzenträgern (2) und/oder Abstandshaltern (5) zu tragen.

8. Das Kultivierungssystem nach einem der vorangehenden Ansprüche, wobei ein Pflanzenträger eine flache, im Wesentlichen rechteckige Platte mit einer Aufnahmeöffnung aufweist, um darin einen Träger aufzunehmen, auf dem die Kulturpflanze oder eine Vorstufe der Kulturpflanze angeordnet ist.

9. Das Kultivierungssystem nach Anspruch 8, wobei die Längskanten der flachen Platte mit einer Nut ausgeführt sind, in der ein Halteflansch angeordnet werden kann.

10. Das Kultivierungssystem nach einem der vorangehenden Ansprüche, wobei der Pflanzenträger (2) so ausgebildet ist, dass er, wenn er von einer quer verlaufenden Kultivierungsrinne und/oder einer axialen Rinne getragen wird, entlang der betreffenden Rinne verschiebbar ist, und/oder wobei die Pflanzenträger (2) und die quer verlaufenden Kultivierungsrinnen so ausgebildet sind, dass sie einen Flüssigkeitsstand so einstellen, dass sich die Kulturpflanze oder ihre Vorstufe zumindest teilweise in die Flüssigkeit erstreckt.

11. Das Kultivierungssystem nach einem der vorangehenden Ansprüche, wobei die Verschiebungseinrichtungen folgendes aufweisen:
- Querverschiebungseinrichtungen zum Bewegen einer Reihe von Pflanzenträgern (2) oder einer Reihe von Pflanzenträgern mit dazwischen angeordneten Abstandshaltern (5) in Querrichtung durch die quer verlaufenden Kultivierungsrinnen; und/oder
- Längsverschiebeeinrichtung zum Bewegen eines oder mehrerer Pflanzenträger (2) oder eines oder mehrerer Pflanzenträger (2) mit dazwischen angeordneten Abstandshaltern (5) in axialer Richtung durch die axialen Rinnen, wobei die Querverschiebungseinrichtungen vorzugsweise je Kultivierungsabschnitt vorgesehen sind und folgendes aufweisen:
- eine Versorgungseinheit, vorzugsweise eine Kartusche, um eine Anzahl von Pflanzenträgem (2) oder Abstandshaltern (5) auf Lager zu halten;
- eine Schiebeeinheit mit einem oder mehreren Schiebern zum Schieben von Pflanzenträgem (2), die über die Versorgungseinheit einzeln durch eine oder mehrere Kultivierungsrinnen zugeführt werden, oder zum Schieben einer Menge von Pflanzenträgem (2), die über eine axiale Rinne zugeführt werden, und Abstandshaltern, die über die Versorgungseinheit einzeln durch eine oder mehrere Kultivierungsrinnen zugeführt werden.

12. Das Kultivierungssystem nach Anspruch 11, wobei die Längsverschiebungseinrichtung einen linear beweglichen Halter aufweist, wobei der Halter zum Tragen eines oder mehrerer Pflanzenträger (2) ausgebildet ist,
und wobei der Halter zwischen einer Position am Ausgabeende einer Anzahl von quer verlaufenden Kultivierungsrinnen eines Kultivierungsabschnitts und einer Position am Zufuhrende einer Anzahl von quer verlaufenden Kultivierungsrinnen eines nachfolgenden Kultivierungsabschnitts durch einen Antrieb in axialer Richtung hin und her bewegt werden kann.

13. Das Kultivierungssystem nach einem der vorangehenden Ansprüche, aufweisend eine oder mehrere Quertrennwände, die zwischen aufeinanderfolgende Kultivierungsabschnitte angeordnet sind, und/oder aufweisend eine Klimaregeleinheit zur Regelung von mindestens einer der Bedingungen Temperatur und Luftfeuchtigkeit.

14. Eine Verwendung eines Anbausystems nach einem der vorangehenden Ansprüche.

15. Ein Verfahren zur Kultivierung einer Pflanze oder einer Vorstufe davon auf Flüssigkeit in einem Kultivierungssystem nach einem der Ansprüche 1-13, wobei das Verfahren folgendes aufweist:
- Platzierung einer Anzahl von Pflanzenträgem (2) in einer Anzahl von gegenseitig nebeneinander angeordneten, quer verlaufenden Kultivierungsrinnen (10) eines ersten Kultivierungsabschnitts (7);
- Herbeiführung eines teilweisen Wachstums der Pflanze oder ihrer Vorstufe in den Pflanzenträgern (2);
- Bewegen der Pflanzenträger (2) von den quer verlaufenden Kultivierungsrinnen (10) des ersten Kultivierungsabschnitts (7) zu quer verlaufenden Kultivierungsrinnen (11) eines zweiten Kultivierungsabschnitts (8) mit dem Zweck den gegenseitigen axialen Abstand zwischen den Pflanzenträgem (2) zu vergrößern.

## Revendications

1. Système de culture pour cultiver une récolte ou un précurseur de celle-ci sur un liquide, le système de culture comprenant un châssis (6) pourvu d'un certain nombre de sections de culture (7, 8, 9) agencées les unes à la suite des autres dans la direction axiale et s'étendant dans la direction transversale, dans lequel chaque section de culture comprend des gouttières de culture transversales parallèles (10, 11, 12) configurées pour porter une rangée d'éléments de retenue de récolte (2) dans laquelle la récolte ou un précurseur de celle-ci peut être retenu(e) et cultivé(e), dans lequel les sections de culture (7, 8, 9) comprennent :
- une première section de culture (7) comprenant un certain nombre de premières gouttières de culture transversales (10) et une seconde section de culture (8) comprenant un certain nombre de secondes gouttières de culture transversales (11), dans lequel les distances axiales mutuelles entre les secondes gouttières de culture transversales (11) sont supérieures aux distances axiales mutuelles entre les premières gouttières de culture transversales (10),
**caractérisé en ce que** les sections de culture comprennent en outre :
- une ou plusieurs gouttières de culture axiales (13, 14) au niveau des extrémités des gouttières de culture transversales (10, 11) des première et seconde sections de culture (7, 8) ;
- des moyens de déplacement pour déplacer les éléments de retenue de récolte (2) à partir de la première section de culture, via l'au moins une gouttière axiale vers la seconde section de culture ;
- une unité d'insertion d'entretoises pour insérer une ou plusieurs entretoises (5) dans les gouttières de culture transversales de la seconde section de culture dans le but d'augmenter la distance transversale mutuelle entre les éléments de retenue de récolte (2) dans les secondes gouttières de culture transversales.

2. Système de culture selon la revendication 1, dans lequel les premières gouttières de culture transversales présentent une première distance transversale mutuelle et les secondes gouttières de culture transversales ont une seconde distance transversale mutuelle, dans lequel la seconde distance transversale mutuelle est supérieure à la première distance transversale mutuelle.

3. Système de culture selon la revendication 1 ou 2, comprenant :
- une ou plusieurs sections de culture supplémentaires, dans lequel chacune des sections de culture supplémentaires comprend un certain nombre supplémentaire de gouttières de culture, dans lequel la distance axiale mutuelle entre les gouttières de culture supplémentaires dans une section de culture supplémentaire est dans tous les cas supérieure à la distance axiale mutuelle entre les gouttières de culture d'une section de culture précédente ;
- des moyens de déplacement supplémentaires pour déplacer les éléments de retenue de récolte (2) dans les gouttières de culture d'une section de culture précédente vers les gouttières de culture d'une section de culture supplémentaire ;
- une unité d'insertion d'entretoises supplémentaire pour insérer une ou plusieurs entretoises (5) entre des éléments de retenue de récolte et/ou des entretoises dans le but d'augmenter dans tous les cas la distance transversale mutuelle entre les éléments de retenue de récolte dans les gouttières de culture des une ou plusieurs sections de culture supplémentaires par rapport à la distance transversale mutuelle dans les gouttières de culture de la section de culture précédente.

4. Système de culture selon l'une quelconque des revendications précédentes, dans lequel les gouttières de culture transversales et/ou les gouttières axiales sont conçues pour retenir dedans un liquide, en particulier de l'eau et/ou dans lequel les gouttières de culture transversales et, de préférence, les gouttières axiales forment des réservoirs pour retenir le liquide à utiliser pour la culture,
dans lequel les gouttières de culture transversales d'une section de culture sont de préférence en liaison liquide avec au moins l'une des gouttières axiales.

5. Système de culture selon l'une quelconque des revendications précédentes, comprenant une vanne dans au moins l'une des gouttières axiales, à une position entre la première section de culture et la seconde section de culture, dans le but d'ouvrir et de fermer une connexion liquide entre les première et seconde sections de culture.

6. Système de culture selon l'une quelconque des revendications précédentes, comprenant une alimentation en liquide et/ou une évacuation de liquide pour alimenter en liquide les gouttières de culture transversales et/ou les gouttières axiales et/ou évacuer du liquide de celles-ci, respectivement.

7. Système de culture selon l'une quelconque des revendications précédentes, dans lequel une gouttière de culture transversale et/ou une gouttière axiale comprend/comprennent :
- un profil allongé avec une coupe transversale sensiblement en U ou en V dont les extrémités extérieures libres sont pourvues de rebords d'appui dirigés vers l'intérieur pour porter sur ceux-ci une rangée d'éléments de retenue de récolte (2) et/ou d'entretoises (5).

8. Système de culture selon l'une quelconque des revendications précédentes, dans lequel un élément de retenue de récolte comprend une plaque plane sensiblement rectangulaire avec une ouverture de réception pour recevoir dedans un support sur lequel la récolte ou un précurseur de la récolte est agencé(e).

9. Système de culture selon la revendication 8, dans lequel les bords longitudinaux de la plaque plate sont incarnés avec une rainure dans laquelle un rebord d'appui peut être agencé.

10. Système de culture selon l'une quelconque des revendications précédentes, dans lequel l'élément de retenue de récolte (2) est configuré, lorsqu'il est porté par une gouttière de culture transversale et/ou une gouttière axiale, pour être déplaçable le long de la gouttière concernée et/ou dans lequel les éléments de retenue de récolte (2) et les gouttières de culture transversales sont configurés pour établir un niveau de liquide tel que la récolte ou un précurseur de celle-ci s'étende au moins partiellement dans le liquide.

11. Système de culture selon l'une quelconque des revendications précédentes, dans lequel les moyens de déplacement comprennent :
- des moyens de déplacement transversal pour déplacer une rangée d'éléments de retenue de récolte (2) ou une rangée d'éléments de retenue de récolte avec des entretoises (5) placées entre eux dans la direction transversale à travers les gouttières de culture transversales ; et/ou
- des moyens de déplacement longitudinal pour déplacer un ou plusieurs éléments de retenue de récolte (2) ou un ou plusieurs éléments de retenue de récolte (2) avec des entretoises (5) placées entre eux dans la direction axiale à travers les gouttières axiales, dans lequel les moyens de déplacement transversal sont de préférence prévus par section de culture et comprennent :
- une unité de fourniture, de préférence une cartouche, pour garder en stock un certain nombre d'éléments de retenue de récolte (2) ou d'entretoises (5) ;
- une unité de poussée avec un ou plusieurs poussoirs pour pousser les éléments de retenue de récolte (2) fournis par l'unité de fourniture un par un à travers une ou plusieurs gouttières de culture ou pousser une quantité d'éléments de retenue de récolte (2) fournis via une gouttière axiale et d'entretoises fournies via l'unité de fourniture un par un à travers une ou plusieurs gouttières de culture.

12. Système de culture selon la revendication 11, dans lequel les moyens de déplacement longitudinal comprennent un élément de retenue mobile linéairement, dans lequel l'élément de retenue est configuré pour porter un ou plusieurs éléments de retenue de récolte (2) et dans lequel l'élément de retenue peut être déplacé par un dispositif d'entraînement selon un mouvement de va-et-vient dans une direction axiale entre une position au niveau de l'extrémité d'évacuation d'un certain nombre de gouttières de culture transversales d'une section de culture et une position au niveau de l'extrémité d'alimentation d'un certain nombre de gouttières de culture transversales d'une section de culture suivante.

13. Système de culture selon l'une quelconque des revendications précédentes, comprenant une ou plusieurs cloisons transversales agencées entre des sections de culture successives et/ou comprenant une unité de régulation de climatisation pour réguler au moins l'une parmi la température et l'humidité de l'air.

14. Utilisation d'un système de culture selon l'une quelconque des revendications précédentes.

15. Procédé de culture d'une récolte ou d'un précurseur de celle-ci sur un liquide dans un système de culture selon l'une quelconque des revendications 1 à 13, le procédé comprenant :
- la mise en place d'un certain nombre d'éléments de retenue de récolte (2) dans un certain nombre de gouttières de culture transversales agencées mutuellement de manière adjacente (10) d'une première section de culture (7) ;
- l'introduction d'une croissance partielle de la récolte ou du précurseur de celle-ci dans l'élément de retenue de récolte (2) ;
- le déplacement des éléments de retenue de récolte (2) à partir des gouttières de culture transversales (10) de la première section de culture (7) vers des gouttières de culture transversales (11) d'une seconde section de culture (8) dans le but d'augmenter la distance axiale mutuelle entre les éléments de retenue de récolte (2) ;
comprenant également l'insertion d'une ou plusieurs entretoises (5) entre les éléments de retenue de récolte (2) pendant le déplacement dans le but d'augmenter la distance transversale mutuelle entre les éléments de retenue de récolte (2).
